# EUROPEAN PATENT APPLICATION

(11) **EP 4 567 419 A1**
(43) Date of publication of application: **11.06.2025**
(21) Application number: 24183284.9
(22) Date of filing: 20.06.2024
(51) Int. Cl.: G01N 29/04, G01N 29/22

(54) **ULTRASONIC SENSOR PROTECTION TUBE DEVICE FOR VISUALIZING INTERIOR OF INVISIBLE MEDIUM UNDER HIGH TEMPERATURE AND HIGH RADIATION**

(30) Priority: 08.12.2023 KR 20230177978
(71) Applicant: FNC Technology Co., Ltd., Yongin-si Gyeonggi-do (KR)
(72) Inventor: SONG, Geun Dong, 34032 Daejeon (KR); BAEK, Seung Heon, 34307 Daejeon (KR); KIM, Beom Kyu, 18495 Hwaseong-si, Gyeonggi-do (KR); SON, Yeong Ho, 18034 Pyeongtaek-si, Gyeonggi-do (KR); LEE, Han Gil, 15551 Ansan-si, Gyeonggi-do (KR); BYUN, Hyun Gi, 18502 Hwaseong-si, Gyeonggi-do (KR); KANG, Ji Hoon, 16577 Suwon-si, Gyeonggi-do (KR); LEE, Jae Hun, 16635 Suwon-si, Gyeonggi-do (KR)
(74) Representative: M. Zardi & Co S.A.

(57) **Abstract**

Disclosed is an ultrasonic sensor protection tube device. The ultrasonic sensor protection tube device includes an external protection tube that forms an exterior of the ultrasonic sensor protection tube device, an internal protection tube disposed within the external protection tube by being spaced apart from the external protection tube, an ultrasonic sensor disposed within the internal protection tube, and an ultrasonic sensor protection block disposed under the external protection tube, the internal protection tube, and the ultrasonic sensor and configured to induce ultrasonic focusing. The ultrasonic sensor protection tube device can protect the ultrasonic sensor in an extreme invisible environment under a high temperature and high radiation, and can also improve the precision of detection of a physical deformation or flaw in a structural material.

## Description

### BACKGROUND

### 1. Technical Field

The present disclosure relates to an ultrasonic sensor protection tube device, and particularly, to an ultrasonic sensor protection tube device for visualizing the interior of an invisible medium under a high temperature and high radiation, which can secure the durability of an ultrasonic sensor and also improve ultrasonic precision in an extreme and opaque medium under a high temperature and high radiation environment.

### 2. Related Art

A sodium-cooled fast reactor (SFR) is an advanced reactor system in which liquid sodium is used as a coolant. For a safe operation and the protection of radiation of the SFR, periodic visual inspection and continuous monitoring for a structural material are essential. However, it is difficult to apply the existing optical inspection method that is applied to a transparent medium to an internal structure of the SFR because liquid sodium has an opaque characteristic. In order to solve such a problem, many researches and efforts are performed in order to develop an ultrasonic-based technology capable of visualization even in an opaque environment. However, despite such development, the deterioration of data quality in a high temperature still remains as a problem, and an error may occur in detecting structural deformation potentially.

In an opaque high-temperature and high-radiation environment, such as the SFR, an immersion type flaw detection technology has been known as a technology for detecting a physical deformation or flaw of a structure. The immersion type flaw detection technology is a method of immersing an ultrasonic sensor into the SFR, and is advantageous in terms of the precision of a signal because ultrasonic waves can be easily transmitted and received, but has a problem in that the lifespan of the ultrasonic sensor is reduced because the ultrasonic sensor is exposed to a high temperature and high radiation.

Patent Document 1 discloses a dual rotation waveguide ultrasonic sensor device, including a sensor unit that detects the location and shape of an object that is placed in an extreme environment by transmitting and receiving first and second ultrasonic signals to and from the object at different angles, a driving unit that changes the posture of the object by dually rotating the locations at which the first and second ultrasonic signals are transmitted and received, and a processing unit that visualizes the first and second ultrasonic signals that are transmitted and received by processing the first and second ultrasonic signals. In this case, the first and second ultrasonic signals include a vertical beam and a rectangular beam.

According to the technology disclosed in Patent Document 1, detection accuracy can be improved to some extent by using a dual rotation waveguide, but an image implementation capable of detecting a fine flaw having a width of 0.5 mm or less is limited.

A conventional technology is technical information that has been owned by an inventor in order to derive the present disclosure or that is obtained in a process of deriving the present disclosure, and may not be said to be a known technology that has been disclosed to the common public prior to filing of the application of the present disclosure.

### [Prior Art Document]

### [Patent Document]

(Patent Document 1) Korean Patent No. 10-1206613 (November 23, 2012)

### SUMMARY

Various embodiments are directed to providing an ultrasonic sensor protection tube device for the visualization of the interior of an invisible medium under a high temperature and high radiation, which can secure the durability of an ultrasonic sensor and also improve ultrasonic precision.

Also, various embodiments are directed to providing an ultrasonic sensor protection tube device, which can protect the ultrasonic sensor and also exhibit the best performance in an opaque and high temperature environment or a harmful environment, such as a lead-cooled reactor, without being limited to a sodium-cooled fast reactor (SFR) environment.

Technical objects to be achieved by the present disclosure are not limited to the aforementioned object, and the other objects not described above may be evidently understood from the following description by a person having ordinary knowledge in the art to which the present disclosure pertains.

In an embodiment, an ultrasonic sensor protection tube device may include an external protection tube that forms an exterior of the ultrasonic sensor protection tube device, an internal protection tube disposed within the external protection tube by being spaced apart from the external protection tube, an ultrasonic sensor disposed within the internal protection tube, and an ultrasonic sensor protection block disposed under the external protection tube, the internal protection tube, and the ultrasonic sensor and configured to induce ultrasonic focusing.

Furthermore, the ultrasonic sensor protection tube device may further include a cooling gas injection pipe disposed within the internal protection tube and configured to inject a cooling gas into the internal protection tube and a cooling gas discharge pipe disposed within the internal protection tube and configured to discharge the cooling gas subjected to a heat exchange to an outside of the internal protection tube.

Furthermore, the ultrasonic sensor protection tube device may further include an ultrasonic sensor cable protection tube connected to the ultrasonic sensor, disposed to surround the ultrasonic sensor cable, and made of a stainless material.

Furthermore, the ultrasonic sensor protection tube device may further include an insulation material or radiation shield material inserted between the external protection tube and the internal protection tube.

Furthermore, the ultrasonic sensor protection tube device may further include an ultrasonic focusing part disposed at a bottom of the ultrasonic sensor protection block and configured to have a concave lens shape.

In this case, screw threads may be formed in an outer circumferential surface of the ultrasonic sensor protection block and an inner circumferential surface of the external protection tube so that the ultrasonic sensor protection block and the external protection tube can be detachably coupled with respect to each other.

As described above, the ultrasonic sensor protection tube device according to an embodiment of the present disclosure can protect the ultrasonic sensor and also improve the precision of detection of a physical deformation or flaw in a structural material in an extreme invisible environment under a high temperature and high radiation.

### BRIEF DESCRIPTION OF THE DRAWINGS

FIG. 1 is an exterior perspective view illustrating the exterior of an ultrasonic sensor protection tube device according to an embodiment of the present disclosure.
FIG. 2 is an internal construction diagram illustrating internal components of the ultrasonic sensor protection tube device according to an embodiment of the present disclosure.
FIG. 3 is a diagram for describing the function of a cooling gas injection pipe according to an embodiment of the present disclosure.
FIGS. 4 and 5 are schematic diagrams for describing the manufacturing of a specimen for tests of the ultrasonic sensor protection tube device according to an embodiment of the present disclosure.
FIG. 6 is a diagram illustrating the results of C-scan flaw detection tests which were performed on a flaw simulation specimen by using the ultrasonic sensor protection tube device according to an embodiment of the present disclosure.
FIG. 7A is a diagram illustrating a micro crack specimen. FIG. 7B is a photo of the micro crack specimen by an optical microscope. FIG. 7C is a diagram illustrating the results of C-scan flaw detection tests which were performed on the micro crack specimen by using the ultrasonic sensor protection tube device according to an embodiment of the present disclosure.

### DETAILED DESCRIPTION

In embodiments of the present disclosure, the accompanied drawings may have been illustrated as exaggerated expressions for differentiation and clarity with a conventional technology and for convenience of the checking of a technology. Furthermore, terms to be described below have been defined by taking into consideration their functions in the present disclosure, and may be changed depending on a user or operator's intention or practice. Accordingly, such terms should be defined based on the overall contents of this specification. An embodiment is merely an exemplary item of a component that is presented in the claims of the present disclosure, and does not limit the range of rights of the present disclosure. The range of rights should be construed based on the technical spirit over the entire specification of the present disclosure.

In the entire specification, when it is described that a component "includes" another component, this means that the component does not exclude any other components, but may further include other components unless specially described to the contrary.

Furthermore, when it is described that a component is "connected to", "coupled to", or "combined with" another component, this means that the component may be "directly connected to", "directly coupled to", or "directly combined with" the another component, or may be "connected to the another component through a third component", "coupled to the another component with a third component interposed therebetween", or "combined with the another component with a third component interposed therebetween". In contrast, when it is described that a component is "directly connected to", "directly coupled to", or "directly combined with" another component, it should be understood that a third component is not present between the two components.

Furthermore, when directional terms, such as "front", "rear", "upper", "lower", "left", "right", "one end", "the other end", and "both ends", are used, the terms are exemplarily used in relation to the orientations of the disclosed drawings, and should not be limitedly construed. When terms, such as "first" and "second", are used, the terms are terms for distinguishing between components and should not be limitedly construed.

In order to more clearly describe characteristic of embodiments of the present disclosure, a detailed description of contents that have been widely known to a person having ordinary knowledge in the art to which the following embodiments pertain are omitted. Furthermore, a detailed description of a part not related to the description of the embodiments in the drawings is omitted.

Embodiments of the present disclosure are described in detail with reference to the accompanying drawings.

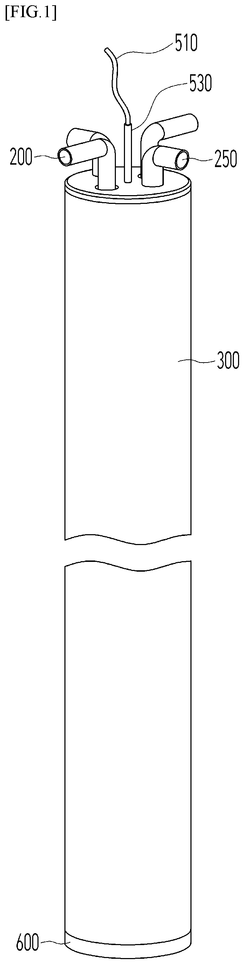

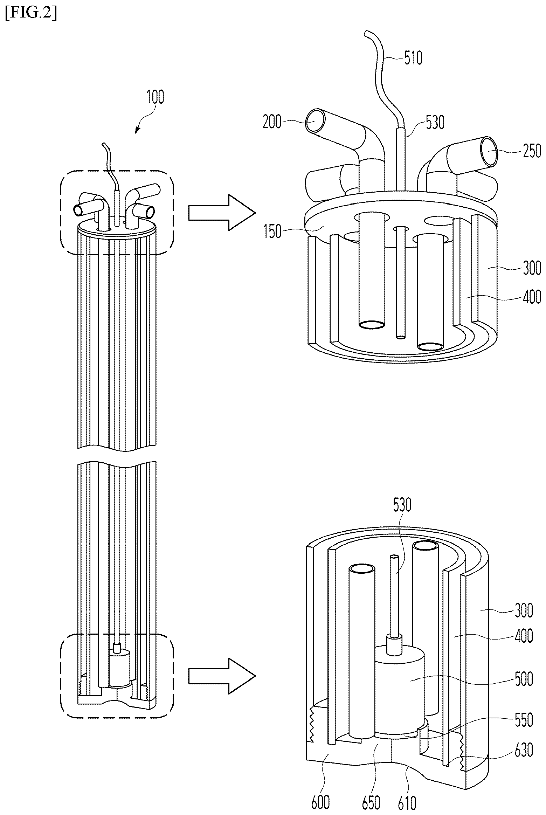

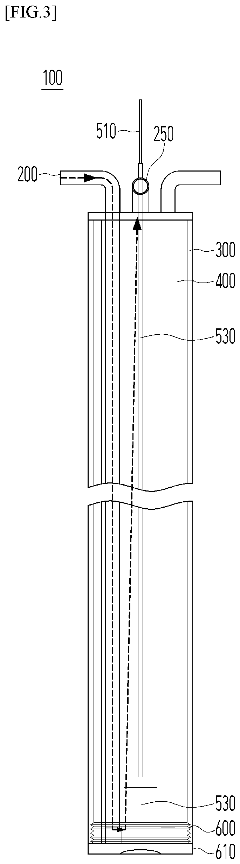

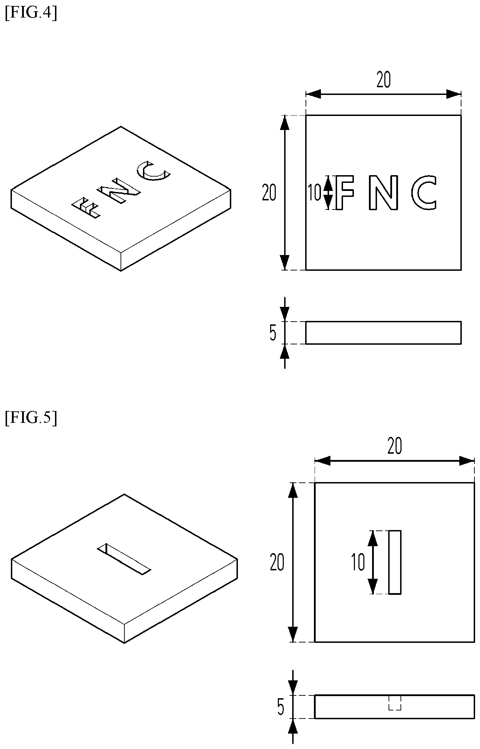

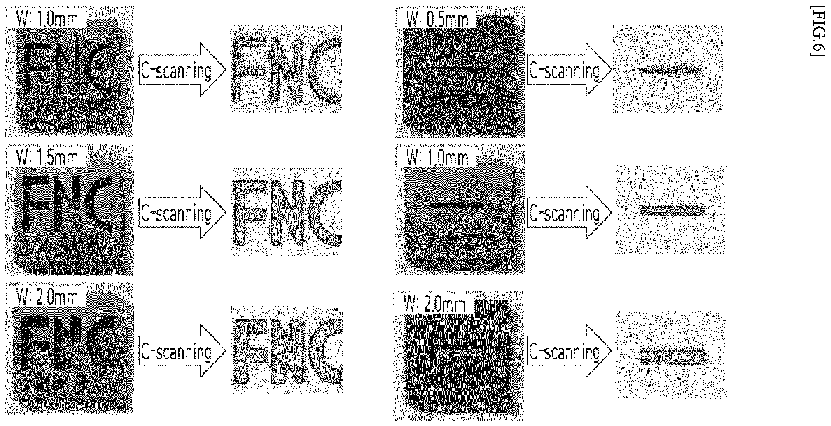

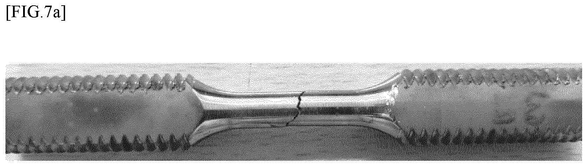

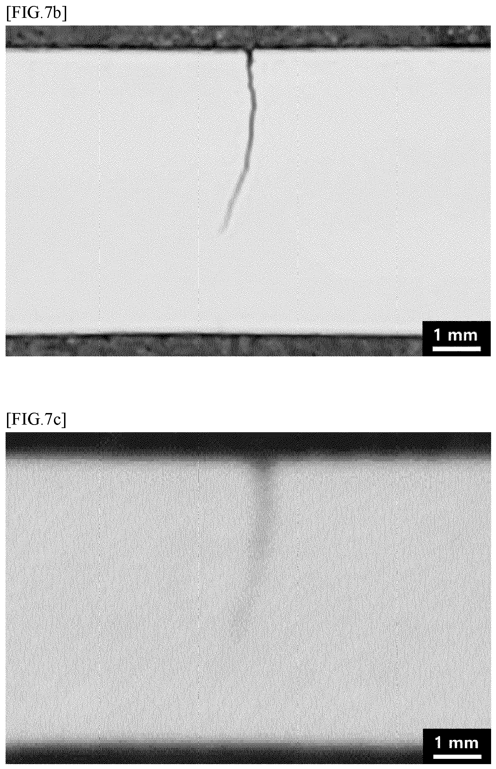

FIG. 1 is an exterior perspective view illustrating the exterior of an ultrasonic sensor protection tube device according to an embodiment of the present disclosure. FIG. 2 is an internal construction diagram illustrating internal components of the ultrasonic sensor protection tube device according to an embodiment of the present disclosure. FIG. 3 is a diagram for describing the function of a cooling gas injection pipe according to an embodiment of the present disclosure. FIGS. 4 and 5 are schematic diagrams for describing the manufacturing of a specimen for tests of the ultrasonic sensor protection tube device according to an embodiment of the present disclosure. FIG. 6 is a diagram illustrating the results of C-scan flaw detection tests which were performed on a flaw simulation specimen by using the ultrasonic sensor protection tube device according to an embodiment of the present disclosure. FIG. 7A is a diagram illustrating a micro crack specimen. FIG. 7B is a photo of the micro crack specimen by an optical microscope. FIG. 7C is a diagram illustrating the results of C-scan flaw detection tests which were performed on the micro crack specimen by using the ultrasonic sensor protection tube device according to an embodiment of the present disclosure.

Referring to FIGS. 1 and 2, an ultrasonic sensor protection tube device 100 according to an embodiment of the present disclosure may be used to detect a physical deformation or flaw of a structure in an opaque and invisible environment under a high temperature and high radiation, such as a sodium-cooled fast reactor (SFR). The ultrasonic sensor protection tube device 100 includes an external protection tube 300, an internal protection tube 400, an ultrasonic sensor 500, and an ultrasonic sensor protection block 600.

In this case, the ultrasonic sensor protection tube device 100 may further include a cooling gas injection pipe 200, a cooling gas discharge pipe 250, a tube cover 150, an ultrasonic sensor cable 510, an ultrasonic sensor cable protection tube 530, an ultrasonic couplant 550, an ultrasonic focusing part 610, an internal protection tube insertion groove 630, and an ultrasonic sensor support part 650.

The external protection tube 300 is a component that forms the exterior of the ultrasonic sensor protection tube device 100.

The external protection tube 300 may be made of a metal material having small reactivity because the external protection tube comes into direct contact with a material having a high temperature, such as liquid sodium. In an embodiment, the external protection tube 300 may be made of a stainless steel or alloy, such as SS316L. Furthermore, the external protection tube 300 may be generally formed in a cylindrical shape in which both ends of the external protection tube are opened.

The internal protection tube 400 may be disposed within the external protection tube 300 by being spaced apart from the external protection tube 300.

The internal protection tube 400 may be formed to have a smaller diameter than the external protection tube 300. Accordingly, a gap may be formed between the internal protection tube 400 and the external protection tube 300.

The internal protection tube 400 may be made of a metal material having good radiation shield performance. In an embodiment, the internal protection tube 400 may be made of a stainless steel or alloy, such as SS316L. Furthermore, the internal protection tube 400 may be generally formed in a cylindrical shape in which both ends of the internal protection tube are opened.

The tube cover 150 is a component for sealing the top of the external protection tube 300 and the internal protection tube 400. The tube cover 150 may be formed so that the tube cover can be attached to and detached from the external protection tube 300 and the internal protection tube 400.

In an embodiment, the tube cover 15 may further include an O-ring so that the airtightness of the inside of the tube cover can be maintained, if necessary.

A cooling gas injection pipe insertion hole (not illustrated) into which the cooling gas injection pipe 200 is inserted, a cooling gas discharge pipe communication hole (not illustrated) that communicates with the cooling gas discharge pipe 250, and an ultrasonic sensor cable insertion hole (not illustrated) through which the ultrasonic sensor cable 510 passes may be formed in the tube cover 150.

The ultrasonic sensor 500 may be disposed within the internal protection tube 400. The ultrasonic sensor 500 may be disposed at the central part of the top of the ultrasonic sensor protection block 600 through the medium of the ultrasonic couplant 550.

The ultrasonic couplant 550 is a component that is disposed between the ultrasonic sensor 500 and the ultrasonic sensor protection block 600 and that minimizes the attenuation of ultrasonic waves.

The ultrasonic sensor cable 510 is a component for connecting the ultrasonic sensor 500 and an ultrasonic flaw detection device (pulser & receiver) (not illustrated).

Data that are measured by the ultrasonic sensor 500 are transmitted to the ultrasonic flaw detection device through the ultrasonic sensor cable 510 connected to the ultrasonic sensor 500. C-scans that indicate the plane of an inspection object may be implemented by using amplitude and time of flight (TOF) values of an ultrasonic signal that is received based on the transmitted data.

The ultrasonic sensor cable protection tube 530 is a component that is connected to the ultrasonic sensor 500 and disposed to surround the ultrasonic sensor cable 510 and that protects the ultrasonic sensor cable 510 and also well closely attaches the ultrasonic sensor 500 to the ultrasonic sensor protection block 600.

The ultrasonic sensor cable protection tube 530 may be made of a stainless material that surrounds the ultrasonic sensor cable 510.

The ultrasonic sensor cable protection tube 530 may be coupled to the ultrasonic sensor 500 disposed thereunder or integrally formed with the ultrasonic sensor 500, and may push the ultrasonic sensor 500 so that the ultrasonic sensor 500 is well closely attached to the ultrasonic sensor protection block 600.

The ultrasonic sensor protection block 600 is a component that is disposed under the external protection tube 300, the internal protection tube 400, and the ultrasonic sensor 500 and that induces ultrasonic focusing. The ultrasonic sensor protection block 600 supports the external protection tube 300, the internal protection tube 400, and the ultrasonic sensor 500 and also enables ultrasonic waves to be smoothly transmitted to and received from the ultrasonic sensor 500. In particular, the ultrasonic sensor protection block 600 induces ultrasonic focusing so that the precision of ultrasonic focusing is improved.

The ultrasonic sensor protection block 600 may be made of nickel (Ni), that is, a metal material that has excellent contact performance with liquid sodium having a high temperature and has excellent heat resistance and that facilitates the propagation of sound waves.

The ultrasonic sensor protection block 600 is inserted between the external protection tube 300 and the internal protection tube 400, and may be detachably coupled to the external protection tube 300 and the internal protection tube 400.

In an embodiment, the ultrasonic sensor protection block 600 may be formed in a circular disk shape. Furthermore, screw threads may be formed in the outer circumferential surface of the ultrasonic sensor protection block 600 and the inner circumferential surface of the external protection tube 300. Accordingly, the ultrasonic sensor protection block 600 and the external protection tube 300 may be detachably screwed with respect to each other.

The internal protection tube insertion groove 630 is a component that enables the internal protection tube 400 to be inserted into the ultrasonic sensor protection block 600 and coupled thereto. The internal protection tube insertion groove 630 may be formed at the top of the ultrasonic sensor protection block 600, which corresponds to a location to which the internal protection tube 400 is coupled.

The ultrasonic sensor support part 650 is a component for enabling the ultrasonic sensor 500 to be disposed on the ultrasonic sensor protection block 600. The ultrasonic sensor support part 650 may be formed at the central part of the top of the ultrasonic sensor protection block 600, which corresponds to a location at which the ultrasonic sensor 500 is disposed.

The ultrasonic focusing part 610 is a component for focusing ultrasonic waves. The ultrasonic focusing part 610 is disposed at the bottom of the ultrasonic sensor protection block 600, and may have a concave lens shape. The precision of focusing of ultrasonic waves can be improved because the ultrasonic waves that are reflected by a surface of a detection target by the ultrasonic focusing part 610 are effectively focused.

The cooling gas injection pipe 200 is a component that is disposed within the internal protection tube 400 and that injects a cooling gas into the internal protection tube 400.

The cooling gas is for protecting various parts, including the ultrasonic sensor 500, in a high temperature environment, such as an SFR, and can maintain an ambient temperature of the ultrasonic sensor 500 around room temperature by a heat exchange. Helium may be used as the cooling gas in order to minimize radioactivation, but the present disclosure is not limited thereto.

The cooling gas injection pipe 200 may be inserted into the internal protection tube 400 through the tube cover 150, and may have an end disposed adjacent to the ultrasonic sensor protection block 600.

The cooling gas injection pipe 200 may be formed in a helical form in order to improve efficiency by increasing a heat exchange area.

The cooling gas discharge pipe 250 is a component that is disposed within the internal protection tube 400 and that discharges a cooling gas subjected to a heat exchange to the outside of the internal protection tube 400. A cooling gas that is injected into the internal protection tube 400 through the cooling gas injection pipe 230 maintains an ambient temperature of the ultrasonic sensor 500 around room temperature by a heat exchange, and may be then discharged to the outside through the cooling gas discharge pipe 250.

The ultrasonic sensor protection tube device 100 may further include a temperature sensor (not illustrated) that is disposed within the internal protection tube 400. The temperature sensor is a component for measuring a temperature within the internal protection tube 400 in real time during ultrasonic flaw detection. The time when the cooling gas is injected through the cooling gas injection pipe 230 and the amount of the injection of the cooling gas may be determined based on an internal temperature that is measured by the temperature sensor in real time.

The ultrasonic sensor protection tube device 100 may further include an insulation material or radiation shield material (not illustrated) that is inserted between the external protection tube 300 and the internal protection tube 400.

The insulation material is a component for protecting the ultrasonic sensor 500 against a high temperature environment. The insulation material may include an aerogel insulator, but the present disclosure is not limited thereto.

The radiation shield material is a component for protecting the ultrasonic sensor 500 against a high radiation environment. The radiation shield material may include metallic hydrides, tungsten, or boron carbide, but the present disclosure is not limited thereto.

### <Test Example>

C-scan flaw detection tests were performed by using the ultrasonic sensor protection tube device according to an embodiment of the present disclosure. The C-scan flaw detection tests were performed on a flaw simulation specimen and a micro crack specimen.

As illustrated in FIGS. 4 and 5, the flaw simulation specimen for underwater visualization C-Scan flaw detection was manufactured to have a size of 20 mm × 20 mm and a thickness of 5 mm by using an SS304L material, that is, a structural material for an SFR. As illustrated in Tables 1 and 2, the flaw simulation specimen for underwater visualization C-Scan flaw detection was manufactured to have 6 character slits (refer to FIG. 4 and Table 1) and 12 rectangular slits (refer to FIG. 5 and Table 2) by etching characters having different depths and widths or processing slits having different depths and widths.

**[Table 1]**

| CHARACTER SLIT | |
|---|---|
| Width (mm) | Depth (mm) |
| 1.0 | 2.0, 3.0 |
| 1.5 | 2.0, 3.0 |
| 2.0 | 2.0, 3.0 |

**[Table 2]**

| RECTANGULAR SLIT | |
|---|---|
| Width (mm) | Depth (mm) |
| 0.5 | 1.0, 1.5, 2.0 |
| 1.0 | 1.0, 1.5, 2.0 |
| 1.5 | 1.0, 1.5, 2.0 |
| 2.0 | 1.0, 1.5, 2.0 |

As illustrated in FIG. 7A, the micro crack specimen was formed by generating a fatigue crack at the central part of the micro crack specimen by using the SS304L material that is the structural material for an SFR.

C-scan flaw detection tests were performed on the flaw simulation specimen and the micro crack specimen by using the ultrasonic sensor protection tube device (the type of sensor: 5 MHz or 10 MHz) according to an embodiment of the present disclosure.

In order to identify a noise signal that is detected by the ultrasonic sensor, a distance between the ultrasonic sensor and the specimen was set to 35 mm. After a gate was set in a specific waveform that was included in a signal by the specimen, a fine flaw was detected based on a change in the waveform.

As illustrated in FIG. 6, as the results of the C-scan flaw detection tests on the flaw simulation specimen, according to the ultrasonic sensor protection tube device according to an embodiment of the present disclosure, a high resolution flaw image having resolution of 0.5 mm to 2.0 mm was obtained. Furthermore, a C-Scan image database for artificial intelligence learning was constructed through repetitive measurements.

As illustrated in FIGS. 7B and 7C, according to the ultrasonic sensor protection tube device according to an embodiment of the present disclosure, a high resolution flaw image of a degree, which might correspond to a photo (FIG. 7B) of an optical microscope, was obtained with respect to a fine fatigue crack that was formed the fine flaw specimen.

As described above, the ultrasonic sensor protection tube device according to an embodiment of the present disclosure can protect the ultrasonic sensor in an extreme invisible environment under a high temperature and high radiation, and can also significantly improve the precision of detection of a physical deformation or flaw in a structural material.

As described above, the present disclosure has been described with reference to the embodiments illustrated in the drawings, but this is merely exemplary. It should be understood that various modifications and other equivalent embodiments are possible based on common knowledge in the art to which a corresponding technology pertains. Accordingly, the true technical range of protection of the present disclosure is based on the claims to be described hereinafter and should be determined based on the aforementioned detailed contents of the present disclosure.

The present disclosure relates to the ultrasonic sensor protection tube device, and may be used in industrial fields related to an immersion type flaw detection technology which is applied to an opaque and high-temperature and high-radiation environment.

### [Description of reference numerals]

100: ultrasonic sensor protection tube device for high temperature and high radiation environment
150: tube cover
200: cooling gas injection pipe
250: cooling gas discharge pipe
300: external protection tube
400: internal protection tube
500: ultrasonic sensor
510: ultrasonic sensor cable
530: ultrasonic sensor cable protection tube
550: ultrasonic couplant
600: ultrasonic sensor protection block
610: ultrasonic focusing part
630: internal protection tube insertion groove
650: ultrasonic sensor support part

## Claims

1. An ultrasonic sensor protection tube device comprising:
an external protection tube that forms an exterior of the ultrasonic sensor protection tube device;
an internal protection tube disposed within the external protection tube by being spaced apart from the external protection tube;
an ultrasonic sensor disposed within the internal protection tube; and
an ultrasonic sensor protection block disposed under the external protection tube, the internal protection tube, and the ultrasonic sensor and configured to induce ultrasonic focusing.

2. The ultrasonic sensor protection tube device of claim 1, further comprising:
a cooling gas injection pipe disposed within the internal protection tube and configured to inject a cooling gas into the internal protection tube; and
a cooling gas discharge pipe disposed within the internal protection tube and configured to discharge the cooling gas subjected to a heat exchange to an outside of the internal protection tube.

3. The ultrasonic sensor protection tube device of claim 1, further comprising an ultrasonic sensor cable protection tube connected to the ultrasonic sensor, disposed to surround the ultrasonic sensor cable, and made of a stainless material.

4. The ultrasonic sensor protection tube device of claim 1, further comprising an insulation material or radiation shield material inserted between the external protection tube and the internal protection tube.

5. The ultrasonic sensor protection tube device of claim 1, further comprising an ultrasonic focusing part disposed at a bottom of the ultrasonic sensor protection block and configured to have a concave lens shape.

6. The ultrasonic sensor protection tube device of claim 1, wherein screw threads are formed in an outer circumferential surface of the ultrasonic sensor protection block and an inner circumferential surface of the external protection tube so that the ultrasonic sensor protection block and the external protection tube are detachably coupled with respect to each other.
